Europäisches Patentamt

European Patent Office

Office européen des brevets

(19)

(11) Publication number : **0 555 090 A1**

# EUROPEAN PATENT APPLICATION

(12)

(21) Application number : 93300862.5

(22) Date of filing : 05.02.93

(51) Int. Cl.$^5$ : **C04B 24/12,** C04B 7/52

(30) Priority : 07.02.92 US 832293
07.02.92 US 832512
24.09.92 US 950873

(43) Date of publication of application :
11.08.93 Bulletin 93/32

(84) Designated Contracting States :
AT BE CH DE DK ES FR GB GR IE IT LI LU NL
PT SE

(71) Applicant : W.R. Grace & Co.-Conn.
Grace Plaza, 1114 Avenue of the Americas
New York, New York 10036-7794 (US)

(72) Inventor : Ferraris, Chiara Francesca
6263, Dawn Day Drive
Columbia, Maryland 21045 (US)
Inventor : Gartner, Ellis Martin
1105, Tanley Road
Silver Spring, Maryland 20904 (US)
Inventor : Myers, David Francis
10920, Rock Coast Road
Columbia, Maryland 21044 (US)

(74) Representative : Bentham, Stephen
J.A. Kemp & Co. 14 South Square Gray's Inn
London, WC1R 5LX (GB)

(54) Processing additive for high pressure roll press for forming finished ground cement from clinker.

(57)    A process using a high-pressure roll press for forming cement powder in which the clinker raw
material entering the roll press is treated with a small amount of at least one additive comprising an
organic hydroxy or alkoxy compound, for instance a trialkanolamine.

EP 0 555 090 A1

The present invention is directed to an improved method of forming hydraulic cement powder product using a high pressure roll press.

Hydraulic cements, such as portland cement, are prepared by sintering a mixture of components which normally include calcium carbonate (as limestone), aluminum silicate (as clay or shale), silicon dioxide (as sand), and miscellaneous iron oxides. During the sintering process, chemical reactions take place to produce hardened nodular products, commonly called clinkers. The clinkers are composed of the reaction products of calcium oxide with acidic components which primarily provide tricalcium silicate ($C_3S$), dicalcium silicate ($C_2S$), tricalcium aluminate ($C_3A$) and a ferrite solid solution phase approximating tetracalcium aluminoferrite ($C_4AF$). The specifics of the raw materials are adjusted to produce clinkers having the desired composition for cement powder formation. Once the clinker material has cooled, it is pulverized, normally with a small amount of gypsum, to provide a fine, homogeneous powdery hydraulic cement product.

The conventional means of producing cement powder is to pulverize a clinker/gypsum mixture using a ball mill. The clinker and gypsum are introduced into a tubular ball mill. Due to the nature of a ball mill, the materials contained in the mill are continuously subjected to impact forces. Such forces aid in churning-up the powdery product and do not permit the powder to combine into large agglomerates. The powder leaving the ball mill is usually fed into a separator which classifies the material by means of its rate of settling in air; the larger particles, which settle most rapidly, being returned to the ball mill for further grinding, and the smaller particles being collected as finished cement.

Due to the inefficiency of action of the ball mill grinding process, a large amount of energy is required to properly mill the material. For example, energy requirements for finish grinding by ball mill may be as high as 75 kWh/ton of product. Part of this energy is used in the continuous impacting of the powdery product prior to its removal from the mill. To further aid in such removal and, thereby, improve on the efficiency of the milling process, a variety of materials commonly known as grinding aids have been used in ball mill operations. Typical grinding aids include glycols, alkanolamines, aromatic acetates and the like. They serve to fluidify the cement powder in the mill and thereby allow more rapid transit of the finer particles out of the system.

Recently, powdery hydraulic cement has been formed from clinker by passing the clinker (alone or with gypsum) through a high pressure roll press. The raw material is introduced, via a hopper, to a set of rollers operated at pressures in the neighborhood of 3000 atm (300 MPa) to exert a squeezing force on the clinker to cause it to fracture into a powder. The powder of the roll press is in the form of an agglomerated cake ("press cake"). The press cake is deagglomerated by passing through a breaker device, such as a hammer mill, and then to a classifier which returns coarse material to the press. The coarse material results from either (a) partial breakage of clinker (inefficiency of roll press) or (b) partial breakage of the agglomerated press cake material (inefficiency of breaker device). The resultant powder material of the roll press processing may,be further subjected to conventional processing, including ball mill treatment and the like.

Although the high pressure roll press is more efficient in energy consumption with respect to the ball mill process, it is desired to improve this newer method by increasing the efficiency of the press and/or breaker device so that, in a given pass-through, there is a higher amount of desired fine particulate produced. Conversely, there would be less coarse material ejected from the classifier and returned to the roll press.

It has been unexpectedly found that hydraulic cement powder can be more efficiently formed from clinker raw material using a high pressure roller press by treating the clinker raw material with a small amount of certain organic hydroxy or alkoxy group containing compounds, as fully described hereinbelow, prior to subjecting the material to the roll press.

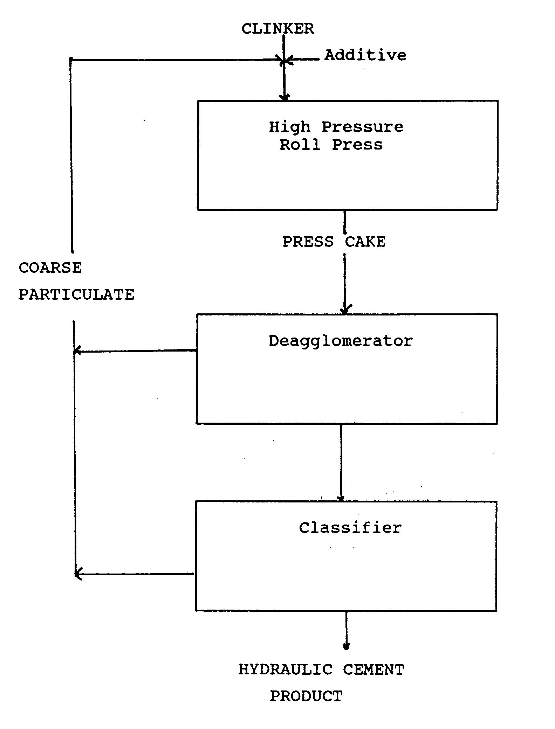

The figure is a block diagram of a high pressure roll press process to form hydraulic cement powder product from clinker raw material.

The present invention is directed to an improved method of forming hydraulic cement powder product from clinker raw material. Specifically, the invention is directed to improving the efficiency of the high pressure roll press process for converting clinker raw material into hydraulic cement powder product.

The term "cement" and "hydraulic cement", as used in the present description and in the appended claims, designate a powdery material which, when mixed with water, is capable of curing to a hard, solid material. The cement is formed from clinker raw material, as described above, either alone or mixed with other components, such as gypsum. Hydraulic cements, when mixed with water form a "paste" which hardens slowly; when mixed with water and fine aggregate (e.g. sand) form a "mortar"; and when mixed with water and fine and coarse aggregate (e.g. sand and stone) form a "concrete" which is a rock-hard product. Hydraulic cements may vary in the particular composition based on end-use application and upon specific specifications established in each country (See, Cement Standards of the World, Cembureau, Paris, FR). In the United States, the American Society for Testing and Materials (ASTM), as well as other agencies, have established certain basic standards for cement based on the principal chemical composition of the clinker raw material used to form the cement. For example, Portland cement is a common hydraulic cement used in the construction industry and meets the specifications of ASTM C-150.

The present process requires introducing clinker raw material of the desired composition to a high pressure roll press. The clinker may be mixed with other conventional materials, such as gypsum, before being subjected to the roll press. For example, gypsum may be added in amounts of up to about 15 percent although high quality cement is normally made with from about 2 to about 10, preferably about 3 to 7 percent by weight of gypsum based on the total raw material used to form the cement powder product.

The clinker raw material is introduced (via a hopper or the like) between the rollers of the high pressure roll press. The rollers subject the clinker nodules to high pressure (conventionally about 2500 to 3500 atm) to squeeze the nodules causing them to splinter and disintegrate. The product of the roll press is a press cake composed of particulates. The present high pressure roll press means of forming cement powder is distinctly different from that of the more conventional ball mill methods. In the present means the clinker nodules are subjected to a squeezing action and to form an agglomerated cake product. In the ball mill, the disintegration of the clinker is caused by impact forces and the product is a powdery product not allowed to form a cake due to the ball action within the mill.

In the present high pressure roll press method, the achieved press cake is deagglomerated by a low-energy impact device, such as a hammer mill. The resultant powder is then passed through a classifier as a means to separate the desired fine particulate product from the larger material which must be returned to the roll press. The larger or coarse material requiring recycling is composed of raw material which did not disintegrate sufficiently during its pass through the high pressure roll press as well as particulates which remained agglomerated after passage through the deagglomerator, and, therefore, were also rejected by the classifier.

It has now been unexpectedly found that improvement in the high pressure roll press process of forming hydraulic cement powder can be achieved by treating the clinker raw material with certain hydroxy or alkoxy group containing organic compounds, as fully described.herein below. It has been found that the amount (percentage) of fine particulate cement powder obtained from the deagglomeration on a single pass basis is increased when the clinker raw material is treated according to the present invention. Stated another way, the amount of material subjected to recycling from the disagglomerator or deagglomorator on a single pass basis is decreased and thereby permits higher levels of clinker to be introduced and processed by the presently improved method.

It has been unexpectedly found that the energy needed to run the roll press in order to form a unit of product can be dramatically reduced when the roll press operation is operated according to the present invention.

The most dramatic result is achieved by treating cement clinker with a higher trialkanolamine. Thus, the present invention provides for the blending of at least one higher trialkanolamine with the clinker raw material (i.e. clinker, nodules alone or with other material) suitable to form a desired cement recipe prior to its introduction into the roll press. The term "higher trialkanolamine" as used herein and the appended claims, shall refer to tertiary amine compounds which are tri(hydroxyalkyl)amines having at least one $C_3$-$C_5$ hydroxyalkyl (preferably $C_3$-$C_4$ hydroxyalkyl) group pendant from an amine nitrogen atom. The remaining hydroxyalkyl groups, if any, of the subject tertiary amine can be selected from $C_1$-$C_2$ hydroxyalkyl groups (preferably $C_2$ hydroxyalkyl). Examples of such compounds include hydroxyethyl di(hydroxypropyl)amine, di(hydroxyethyl) hydroxypropylamine, tri(hydroxypropyl)amine, hydroxyethyl di(hydroxy-n-butyl)amine, tri(2-hydroxybutyl)amine, hydroxybutyl di(hydroxypropyl)amine, and the like. The preferred higher trialkanolamines of this invention are triisopropanolamine (TIPA), N,N-bis(2-hydroxyethyl)-N-(2-hydroxypropyl)amine (BHEHPA) and tri(2-hydroxybutyl) amine (T2BA). Further, the higher trialkanolamine may be in the form of the free amine or as a salt with an inorganic or organic acid such as, for example, sulfuric acid, acetic acid, gluconic acid and the like. Mixtures of higher trialkanolamines can be used.

The most preferred additive is triisopropanolamine and its salts, such as triisopropanolamine acetate and triisopropanolamine gluconate. These materials, as the preferred additive, can be used alone or as a mixture with other higher trialkanolamines or their salts or with the other hydroxy and alkoxy group containing compounds, described below.

Although lower trialkanolamines have been known to be useful as grinding aids for ball mill applications where impact forces are encountered, such compounds, as shown by comparative example herein below, do not enhance the performance of the present roll press process. The present improved process is unexpectedly achieved by the presence of a higher trialkanolamine as part of the raw material being processed by roll press to provide hydraulic cement powder.

Other hydroxyl or alkoxyl containing organic compounds suitable to provide an improved high pressure roll press method are organic hydroxyl containing compound which is an aromatic compound, such as phenol, cresol and the like, or an aliphatic compound such as diethylene glycol, monopropylene glycol and the like, or mixtures thereof and the organic alkoxy group containing material, lignin and its salts, such as lignin sulfonate. Lignin is readily obtained from the sulfate and soda paper pulp processes. It is a mixture of materials which contain a high content of methoxy groups. The preferred additives are phenol and lignin.

The subject additives can be mixed with the clinker nodule raw material in any convenient manner. The means of addition of the subject additive is not critical to the invention, as long as the additive is well dispersed among the other raw materials. The additive may be directly applied to the clinker raw material or, may be applied at any other point in the roll press operation which permits introduction of the additive as part of the roll press clinker raw material. For example, in certain roll press operations the tailings from the classifier and/or a portion of the press cake are recycled and mixed with the clinker raw material at a point before subjection to the roll press. The subject additive can be applied to such tailings and/or recycle press cake to thus be made part of the roll press' raw material. The preferred manner is by applying (e.g. spraying) an aqueous solution of the present additive onto the raw material. The aqueous solution may contain from about 5 to 95 (preferably 30 - 80) weight percent of the higher trialkanolamine or mixture of same. The additive is applied at rates to provide dosages of from 25 to 2500 g per metric ton of clinker raw material. It has been found that preferred dosages of from about 100 to 1000 g per metric ton provide enhanced efficiency to the process. The particular dosage can be determined by minor experimentation and will depend upon the raw material composition and the particular additive or mixture used.

The clinker raw material may be composed of clinker nodules alone, clinker nodules combined with other materials, such as gypsum, limestone, slag, pozzolans and the like, or other dry materials commonly used in the production of cement. The particular raw material composition will depend upon the particular cement product desired, as is well known to the processor. Other additives may also be introduced as part of the raw material to provide a hydraulic cement product having certain particular desired properties. For example, the raw material may further contain cement water reducing agents, such as lignin, naphthalene sulfonateformaldehyde and the like; set retarders, such as sugars and the like; set accelerators such as calcium nitrite and the like; and cement strength enhancers, such as microsilicas (silicafumes), rice hull ash and the like. These materials may be added separately or with the subject additive.

The following examples are given for illustrative purposes only and are not meant to be a limitation on the appended claims. All parts and percentages are by weight unless otherwise indicated.

## Examples

The high pressure roll press process, composed of subjecting clinker raw material to the high pressure squeezing action of a roll press, deagglomeration by a hammer mill and classification of the resultant particulate to separate fines from coarse or non-deagglomerated material, was replicated using a static system. The system utilized, as fully described below, a static press to reproduce the squeezing action associated with the roll press, an impact hammer/sieve separator to reproduce the hammer mill forces, and final classification by a high-efficiency air separator of the fine fraction from the sieve separation classifier to attain the desired product. Although not used in the experimental processes which illustrate the present invention, the high pressure roll press process may include the use of a ball mill within the process stream after the roll press.

Specifically, in the experimental process, stainless steel cylindrical die used was composed of a tubular cylinder, a solid cylinder of a diameter equal to the inner diameter of the tubular cylinder and a removable base plate. This die was used in combination with a high pressure press capable of exerting 300 MPa on the material being squeezed within the die. The formed press cake was removed from the die by removing the base plate, replacing it with a stainless steel cup and forcing the piston to the base of the tubular cylinder to cause the formed press cake to drop into the cup.

The samples were deagglomerated by placing a stainless steel plate on top of the press cake disk and subjecting it to the hammer force of a four (4) lb. weight dropping from 33.7 cm height three times. Removing fines was accomplished by passing the material through a No. 8 U.S. Standard Sieve and again subjecting the retained material to the deagglomeration and separation process. The retained coarse material was weighed and compared to the weight of the starting material, giving an index of press cake strength and ability to deagglomerate. The fines attained from deagglomeration were subjected to a classifier which separated out material of less than 30 micron diameter (useful as cement powder). The coarse material from the classifier was combined with the coarse material obtained from the simulated hammer mill and returned (with fresh make-up clinker) to the die cylinder for the next cycle. The cycling was done seven times.

The effectiveness of crushing the clinker and deagglomeration of the press cake was measured by the amount of a coarse material retained on the sieve after complete hammer action of each pass with the average value of the last five cycles divided by the batch size.

## I. Higher Trialkanolamine - Laboratory Scale

300 parts of clinker nodules #1 (obtained from a commercial cement factory) which were suitable for forming portland cement were mixed with 19 parts of terra alba gypsum to form a uniform mixture. 150 parts of this clinker raw material were introduced into the cylindrical die and processed in the manner described above. The retained material was 9.2 percent by weight and the fine cement powder obtained from the classifier had a median particle size of 10.6 microns and a Blaine surface area of 279 m²/kg.

The above was repeated using 300 parts of clinker nodules #2 (obtained from a second cement factory) which was also suitable for forming portland cement and having cement compound constituent analysis of 78.6% $C_3S$; 0.6% $C_2S$; 0.9% $C_3A$; 15.9% $C_4AF$, and 19 parts of terra alba gypsum to provide a uniform mixture. The retained material was 7.4 percent by weight and the fine powder obtained from the classifier had a median particle size of 12.4 micron and a Blaine value of 269 m²/kg.

The retained material percentages of 9.2 (for #1) and 7.4 (for #2) were used as standards for determining efficiency (the lower the percentage, the higher the efficiency) achieved by additives.

Treated clinker raw materials were formed by mixing 300 parts clinker, 19 parts terra alba gypsum and spraying it with a ten percent aqueous solution of triisopropanolamine at the rates given below. Each batch was processed are the manner described above. The results of each test is given in Table I below along with the blanks made above for comparison.

## TABLE I

| RAW MATERIAL | | | | PROCESS MATERIAL | | |
|---|---|---|---|---|---|---|
| Clinker Code | Clinker Amt. % | Gypsum % | TIPA ppm* | BLAINE fineness m²/kg | Median Part diam./μm | Retained % |
| 1 | 94 | 6 | - | 279 | 10.6 | 9.2 |
| 2 | 94 | 6 | - | 269 | 12.4 | 7.4 |
| | | | | | | |
| 1 | 94 | 6 | 300 | 295 | 11.0 | 3.4 |
| 2 | 94 | 6 | 200 | 288 | 9.4 | 3.7 |
| 2 | 94 | 6 | 300 | 294 | 10.2 | 6.3 |

\*ppm = parts per million by mass = grams per metric ton

Further, for comparative purposes, a simulated roll press process was done as described above except that triethanolamine (TEA) was used at the rate of 200 g per metric ton (ppm) of raw material. Table II below shows a comparison of this run versus the back-to-back run done with TIPA.

## TABLE II

| Clinker Code | Clinker % | Gypsum % | Additive/Rate ppm | Blaine Fineness m²/kg | Median Part. Diameter, μm | Retained % |
|---|---|---|---|---|---|---|
| 2 | 94 | 6 | TEA/200 | 274 | 10.9 | 10.0 |
| 2 | 94 | 6 | TIPA/200 | 288 | 9.4 | 3.7 |

From the data of Tables I and II above, one can observe that the process, according to the present invention, provides less coarse material (lower percent retained material) and product of higher fineness (higher Blaine value) then either untreated material or material treated with conventional ball mill grinding additive TEA.

## II. Phenol and Lignin Additive - Laboratory Scale.

300 parts of clinker nodules #2 obtained from a commercial cement factory which is suitable for forming portland cement and having cement compound constituent analysis of 78.6%, $C_3S$; 0.6% $C_2S$; 0.9% $C_3A$; 15.9% $C_4AF$, 19 parts of terra alba gypsum were mixed and sprayed with an aqueous solution having 10 wt. percent lignin to provide a uniform mixture. The lignin was applied at the rate of 650 g per metric ton. 150 parts of this clinker raw material was introduced into the cylinder die and processed in the manner described above. The retained material was 9.8 percent by weight and the fine powder obtained from the classifier had a median particle size of 11.0 micron and a Blaine value of 280 m2/kg.

The procedure described above was conducted using phenol instead of lignin. The rate of application was 200 g/metric ton. The retained material exhibited low levels of coarse particulate of 7.0 percent by weight and the fine powder obtained from the classifier had a median particle size of 11.3 and a Blaine fineness value of 287 m2/kg.

III. Higher Trialkanolamine - Commercial Scale

A commercial roll press processing system was also used to evaluate the improvement achieved under the present invention. The system had a capacity of about 2 metric tons of finished product per hour and comprised (a) a feed hopper capable of delivering clinker raw material to a roll press. The delivery feed line has the ability to intermix recycled material, as described below, with the clinker prior to entering the roll press. The press cake from the roll press was sent to a hammer mill dissagglomerator and then on to a cyclone classifier which was run at a speed to give a Blaine of 360 m2/kg for the finished product. Classifier tailings and a portion of the press cake were continuously combined and recycled to the roll press as part of the clinker raw feed.

The roll press system was run with no addition of agent ("Blank"); with the addition of a higher trialkanolamine, triisopropanolamine ("TIPA") directly to the clinker raw material ("TIPA I") or applied to the portion of press cake which is recycled and mixed with clinker V ("TIPA II"); and, for comparative purposes, with a lower trialkanolamine, triethanolamine ("TEA"). The amines were applied by spraying a 70% wt. percent aqueous solution to the amine directly onto the designated material at a dosage rate of 0.02 percent by weight amine solid based on the total weight of solid roll press feed material (S/S).

In each instance, the system was allowed to come to equilibrium prior to making measurements and/or taking samples for analysis. The clinker raw material supplied from the feed hopper was composed of 95% Type OPC Clinker and 5% calcium sulfate (REAGYPS; 30% as hemihydrate and 70% as anhydride) and produced a commercial cement powder product having a $SO_3$ content of about 2.8 percent.

The energy consumption required to operate the roll press was monitored during each run over a period of at least one hour. The results given in Table III below show that introduction of TIPA to the clinker material significantly reduces the energy consumption requirements of the process. It also shows that the energy requirements for a roll press system are substantially less than used in conventional ball mill systems (75 hwh/ton) and the present additive further improves the energy consumption.

**Table III**

| Additive | Dosage % | Energy Consumption | |
|---|---|---|---|
| | | kWh/ton | % of Blank |
| Blank | - | 23 | 100 |
| TIPA I | 0.02 | 17 | 74 |
| TIPA II | 0.02 | 19 | 75 |
| TEA (comparative) | 0.02 | 23 | 100 |

Samples of press cake were collected at a point prior to the hammer mill dissaglomerator and sieved, as received, using a No. 8 U.S. Std. Sieve (2.36 mm openings). The results were given in Table IV below shows that a higher degree of disintegration of the press cake occurs even without the disagglomerator when the material is treated with a higher trialkanolamine. In contrast, a lower trialkanolamine (TEA) caused more cohesiveness of the press cake.

**TABLE IV**

| Additive | Dosage % ss | Fines % less than 2.36 mm |
|---|---|---|
| Blank | ----- | 43 |
| TIPA I | 0.02 | 57 |
| TIPA II | 0.02 | 57 |
| TEA | 0.02 | 39 |

The particle size distributions of the classifier feed and tailings were determined by sieving the samples and analyzing the material having a particle size of less than 125 $\mu$m using a Malvern Mastersizer light scattering analyzer. The results are given in Table IV below:

**TABLE V**

| Additive | Dosage | Fines % | | Median Particle Diameter $\mu$m |
|---|---|---|---|---|
| | | Feed | Tail | |
| Blank | --- | 62 | 46 | 10.49 |
| TEA | 0.02 | 64 | 45 | 9.10 |
| TIPA I | 0.02 | 82 | 56 | 9.08 |

**Claims**

1. A process for forming cement powder from clinker raw material which comprises subjecting clinker raw material to a high pressure roll press so as to pulverise the clinker raw material within the roll press and form a press cake, disintegrating the press cake and removing coarse particulate, in which at least one additive comprising an organic hydroxy or alkoxy compound selected from a higher trialkanolamine, an aromatic hydroxy compound, an aliphatic polyhydroxy compound and lignin, is applied to the clinker raw material prior to subjecting the material to the roll press at a dose of from 25 to 2500 g per metric ton of clinker raw material.

2. A process according to claim 1 wherein the additive comprises a higher trialkanolamine having at least one $C_3$-$C_5$ hydroxyalkyl group pendant from the amine nitrogen atom and any remaining groups pendant from the amine nitrogen atom are $C_1$-$C_2$ hydroxyalkyl groups, an organic acid salt thereof or a mixture of such trialkanolamines.

3. A process according to claim 2 wherein each group bonded to the amine nitrogen atom of the higher trialkanolamine is a $C_3$-$C_5$ hydroxyalkyl group.

4. A process according to claim 2 or 3 wherein the additive comprises a trialkanolamine which is triisopropanolamine, N,N-bis(2-hydroxyethyl)-N-(2-hydroxypropyl) amine or tri(2-hydroxybutyl) amine, a salt thereof, or a mixture thereof.

5. A process according to claim 4 wherein the trialkanolamine additive comprises triisopropanolamine or a salt thereof.

6. A process according to any one of the preceding claim wherein the additive comprises phenol, lignin or a salt thereof.

7. A process according to any one of the preceding claims wherein the additive is applied to the clinker raw material as an aqueous solution, comprising from 5 to 95 weight percent additive.

8. A process according to any one of the preceding claims wherein the additive further comprises a cement admixture agent.

9. Cement powder obtainable by a process as defined in any one of claims 1 to 8.

CLINKER

Additive

High Pressure
Roll Press

PRESS CAKE

COARSE
PARTICULATE

Deagglomerator

Classifier

HYDRAULIC CEMENT
PRODUCT

**European Patent Office**

## EUROPEAN SEARCH REPORT

Application Number

EP 93 30 0862

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 381 569 (K. SCHONERT)<br>* page 1, line 1 - line 27 *<br>* page 4, line 18 - page 5, line 35 *<br>* page 6, line 8 - line 29 *<br>* page 8, line 18 - page 9, line 14 *<br>* page 12, line 36 - page 13, line 15; claims 1-2,9,10 * | 1,9 | C04B24/12<br>C04B7/52 |
| Y | | 2-6,8 | |
| Y | GB-A-470 365 (DEWEY AND ALMY, LTD.)<br>* page 1, line 31 - page 2, line 1 *<br>* page 3, line 4 - line 122; claims 1-5 * | 2-5 | |
| A | | 7 | |
| Y | FR-A-1 524 838 (W.R. GRACE & CO.)<br>* page 2, column 1, line 3 - column 1, line 61 *<br>* page 2, column 2, line 10 - column 2, line 40 *<br>* page 4, line 1 - line 7; claims 1-2 * | 6,8 | |
| A | CHEMICAL ABSTRACTS, vol. 109, no. 24, 12 December 1988, Columbus, Ohio, US; abstract no. 215123x, 'Grinding of cement clinker by vertical roller mill'<br>page 260 ;<br>* abstract *<br>& JP-A-63 159 241 (UBE INDUSTRIES, LTD.) | 1,9 | TECHNICAL FIELDS SEARCHED (Int. Cl.5 )<br><br>C04B |
| A | FR-A-2 385 653 (K. KOLAR ET AL)<br>* page 5, line 30 - page 6, line 35 *<br>* page 7, line 24 - page 8, line 17; claim 1; example 15 * | 6,8 | |

The present search report has been drawn up for all claims

| Place of search | Date of completion of the search | Examiner |
|---|---|---|
| THE HAGUE | 12 MAY 1993 | OLSSON S.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)